(19) Europäisches Patentamt
European Patent Office
Office européen des brevets

(11) EP 0 678 538 B1

(12) **EUROPÄISCHE PATENTSCHRIFT**

(45) Veröffentlichungstag und Bekanntmachung des Hinweises auf die Patenterteilung:
**03.03.1999 Patentblatt 1999/09**

(51) Int Cl.$^6$: **C08G 64/14**, C08G 63/64

(21) Anmeldenummer: **95105092.1**

(22) Anmeldetag: **05.04.1995**

(54) **Verwendung von hydrierter Abietinsäure als Kettenabbrecher für die Herstellung von Polycarbonaten und von Polyestercarbonaten**

Use of hydrogenated abietic acid as chain terminator for the preparation of polycarbonates and polyestercarbonates

Utilisation d'acide abiétique hydrogené comme agent de terminaison de chaîne dans la préparation de polycarbonates et de polyestercarbonates

(84) Benannte Vertragsstaaten:
**BE DE FR GB IT NL**

(30) Priorität: **18.04.1994 DE 4413397**

(43) Veröffentlichungstag der Anmeldung:
**25.10.1995 Patentblatt 1995/43**

(73) Patentinhaber: **BAYER AG**
**51368 Leverkusen (DE)**

(72) Erfinder:
- **Köhler, Burkhard, Dr.**
  **D-47829 Krefeld (DE)**
- **Ebert, Wolfgang, Dr.**
  **D-47800 Krefeld (DE)**
- **Horn, Klaus, Dr.**
  **D-41539 Dormagen (DE)**
- **Dhein, Rolf, Dr.**
  **D-47800 Krefeld (DE)**

(56) Entgegenhaltungen:
**US-A- 4 358 563**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 678 538 B1

Printed by Jouve, 75001 PARIS (FR)

## Beschreibung

Gegenstand der vorliegenden Erfindung ist die Verwendung von hydrierter Abietinsäure als Kettenabbrecher für die Herstellung von thermoplastischen aromatischen Polycarbonaten.

Abietinsäure ist bekannt.

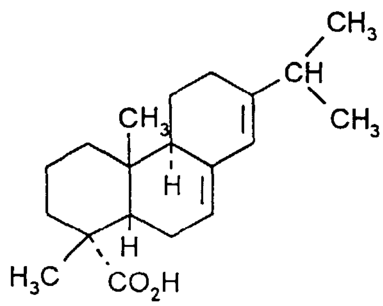

Abietinsäure

(Siehe beispielsweise Fieser und Fieser, Organische Chemie, Verlag Chemie GmbH, Weinheim 1965, Seite 1564).

Hydrierte Abietinsäure, also Dihydro- und Tetrahydroabietinsäure ist ebenfalls bekannt und wird durch Hydrierung von Kolophonium erhalten (siehe beispielsweise Ullmanns Encyclopädie der technischen Chemie, Verlag Chemie Weinheim, 4. Auflage, Band 12, Seiten 529 bis 536, insbesondere Seite 532).

Die erfindungsgemäß erhältlichen Polycarbonate mit hydrierten Abietat-Endgruppen der Formel (I)

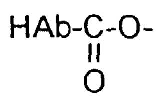

(I),

worin

HAb den hydrierten Rest der Formel (Ia) und/oder der Formel (Ib)

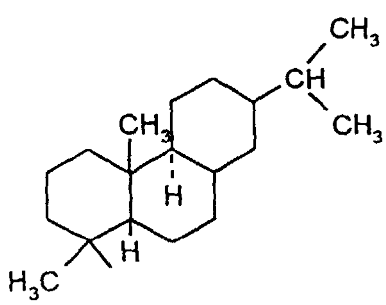

(Ia)

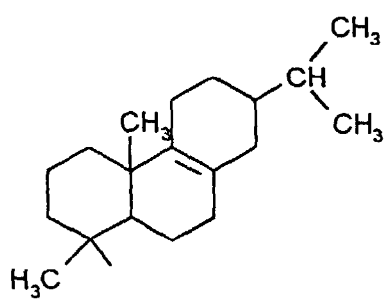

(Ib)

darstellt, haben eine erhöhte Glastemperatur, und damit eine verbesserte Wärmeformbeständigkeit, sowie eine verbesserte Tieftemperaturzähigkeit.

Aus der US-PS 4 358 563 sind Polycarbonate mit Abietat-Endgruppen bekannt. Sie zeigen eine bessere Verträglichkeit zu Polyethylen. Daher sind in der US-PS 4 358 563 vor allem auch Blends der Abietat-endgruppenhaltigen Polycarbonate mit Polyolefinen beschrieben. Jedoch sind die Abietat-terminierten Polycarbonate gelb-braun gefärbt und nicht temperaturstabil.

Die Herstellung der thermoplastischen aromatischen Polycarbonate unter Verwendung von hydrierter Abietinsäure als Kettenabbrecher kann nach den bekannten Methoden der Polycarbonatsynthese erfolgen, also sowohl nach dem Phasengrenzflächenverfahren, nach dem Verfahren zu homogener Lösung (dem sogenannten Pyridinverfahren) als auch nach dem Schmelzumesterungsverfahren.

Gegenstand der vorliegenden Erfindung ist somit auch ein Verfahren zur Herstellung von thermoplastischen, aromatischen Polycarbonaten aus Diphenolen, Carbonatspendern, Kettenabbrechern und gegebenenfalls Verzweigern nach den bekannten Methoden des Phasengrenzflächenverfahrens, des Verfahrens in homogener Lösung oder des Schmelzumesterungsverfahrens, das dadurch gekennzeichnet ist, daß man als Kettenabhbrecher hydrierte Abietinsäure, vorzugsweise Tetrahydroabietinsäure in Mengen von 0,6 Mol-% bis 12 Mol-%, vorzugsweise von 2 Mol-% bis 7 Mol-%, bezogen auf Mole an eingesetzten Diphenolen, einsetzt.

Die erfindungsgemäß erhältlichen Polycarbonate haben Molekulargewichte $\overline{M}w$ (Gewichtsmittel, ermittelt über die relative Lösungsviskosität in $CH_2Cl_2$ bei 25°C und 0,5 g pro 100 ml $CH_2Cl_2$) zwischen 10 000 und 200 000, vorzugsweise zwischen 30 000 und 70 000.

Gegenstand der vorliegenden Erfindung sind somit außerdem die nach dem erfindungsgemäßen Verfahren erhältlichen aromatischen Polycarbonate mit mittleren Molekulargewichten $\overline{M}w$ (Gewichtsmittel ermittelt wie vorstehend) von 10 000 bis 200 000, vorzugsweise von 30 000 bis 70 000.

Gegenstand der vorliegenden Erfindung sind außerdem thermoplastische, aromatische, gegebenenfalls verzweigte Polycarbonate mit Gewichtsmittelmolekulargewichten $\overline{M}w$ (ermittelt wie vorstehend) von 10 000 bis 200 000, vorzugsweise von 30 000 bis 70 000 mit Endgruppen der Formel (I).

Für die erfindungsgemäße Herstellung der thermoplastischen Polycarbonate geeignete Diphenole sind im Prinzip alle Diphenole, deren OH-Gruppen unter den Bedingungen des Phasengrenzflächenverfahrens oder des Verfahrens in homogener Phase oder des Schmelzumesterungsverfahrens unter Polycarbonatbildung reagieren, also beispielsweise nicht durch sterische Behinderung oder sonstige molekulare Faktoren an der Reaktion gehindert sind, und die ansonsten entweder unsubstituiert sind oder nur solche Substituenten haben, die unter den genannten Bedingungen der Polycarbonatherstellung inert sind, wie beispielsweise Alkylsubstituenten oder Halogensubstituenten.

Geeignete Diphenole sind insbesondere solche der Formel (II)

$$HO\text{-}D\text{-}OH \qquad (II),$$

worin

-D- ein zweibindiger Arylenrest mit 6 bis 50 C-Atomen, vorzugsweise mit 12 bis 45 C-Atomen ist, der einkernig oder mehrkernig sein kann, mehrkernig linear verknüpft oder mehrkernig annelliert verknüpft sein kann, der als Bindeglieder noch Heteroatome sowie auch C-haltige Heterosegmente enthalten kann, wobei diese C-Atome oder Heterosegmente nicht unter den vorstehend genannten 50 C-Atomen der Diphenole der Formel (II) subsummiert sind.

Die Diphenole der Formel (II) können unsubstituiert sein oder die vorstehend genannten inerten Substituenten haben, also beispielsweise die erwähnten Halogensubstituenten oder die erwähnten Alkylsubstituenten, wobei die C-Atome potentieller Substitutenten, also beispielsweise der Alkylsubstituenten unter die vorstehend genannten 50 C-Atome oder Diphenole der Formel (II) zu subsummieren sind.

Geeignete Diphenole (II) sind beispielsweise

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole,

sowie deren kernalkylierte und kernhalogenierte Verbindungen.

Diese und weitere geeignete Diphenole sind z.B. in den US-PS 3 028 365, 2 999 835, 3 148 172, 2 991 273, 4 982 014, 3 271 367 und 2 999 846, in den deutschen Offenlegungsschriften 1 570 703, 2 063 050, 2 036 052, 2 211 956, der französischen Patentschrift 1 561 518, in der Monographie "H. Schnell, Chemistry and Physics of Polycarbonates, Interscience Publishers, New York 1964", sowie in den japanischen Offenlegungsschriften 62039/1986,

62040/1986 und 105550/1986 beschrieben.

Bevorzugte Diphenole sind z.B.:

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-Dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-3,3,5-trimethylcyclohexan (TMC-Bisphenol).

Besonders bevorzugte Diphenole sind z.B.:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan (TMC-Bisphenol).

Es können auch beliebige Mischungen der vorgenannten Diphenole verwendet werden.

Gegenstand der vorliegenden Erfindung sind somit vorzugsweise Polycarbonate mit $\overline{M}w$ (Gewichtsmittelmolekulargewichte ermittelt über die relative Lösungsviskosität in $CH_2Cl_2$ bei 25°C und 0,5 g pro 100 ml $CH_2Cl_2$) von 10 000 bis 200 000, vorzugsweise von 30 000 bis 70 000, der Formel (III)

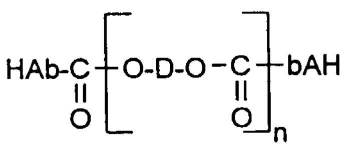

(III)

worin HAb der hydrierte Rest der Formel (Ia) ist, -D- der zweibindige Rest der Formel (II) und "n" der Polymerisationsgrad ist der aus den Gewichtsmittelmolekulargewichten $\overline{M}w$ von 10 000 bis 200 000, vorzugsweise von 30 000 bis 70 000 resultiert.

Als geeignete Carbonatspender sind vorzugsweise Phosgen und Diphenylcarbonat, aber auch die Bischlorkohlensäureester der einzusetzenden Diphenole und die Bis-phenylcarbonate der einzusetzenden Diphenole.

Geeignete Verzweiger werden in geringen Mengen, vorzugsweise in Mengen zwischen 0,05 und 2,0 %Mol-%, bezogen auf Mole eingesetzter Diphenole, tri- oder mehr als trifunktionelle Verbindungen, insbesondere solche mit drei oder mehr als drei phenolischen Hydroxylgruppen mitverwendet. Einige der verwendbaren Verbindungen mit drei oder mehr als drei phenolischen Hydroxylgruppen sind beispielsweise

Phloroglucin,
4,6-Dimethyl -2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,

2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4''-dihydroxytriphenyl)-methyl)-benzol.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Die Bedingungen des Phasengrenzflächenverfahrens, Lösungsmittel, wäßrige alkalische Phase, Katalysator, Temperatur, Druck, Aufarbeitung sind die üblichen, bekannten. Entsprechendes gilt für das Verfahren in homogener Phase (Pyridinverfahren).

Die Bedingungen des Schmelzumesterungsverfahrens, Temperaturführung, Einstellung der Reaktionsdrükke, Art- und Zugabezeitpunkt der Katalysatoren sowie Reaktortypen sind ebenfalls die üblichen.

Die Herstellung der erfindungsgemäßen Polycarbonate erfolgt vorzugsweise nach dem Phasengrenzflächenverfahren (vgl. H. Schnell, "Chemistry and Physics of Polycarbonates", Polymer Reviews, Vol. IX, Seite 33ff., Interscience Publ., 1964). Hierbei werden die Diphenole, vorzugsweise der Formel (II) in wäßrig alkalischer Phase gelöst. Dazu werden die zur Herstellung der erfindungsgemäßen Polycarbonate erforderlichen Mengen an hydrierter Abietinsäure in einem organischen Lösungsmittel gelöst, zugegeben. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0 und 40°C.

Die gegebenenfalls mitzuverwendenden 0,05 bis 2 Mol-%, bezogen auf Mole eingesetzte Diphenole, an Verzweigern können entweder mit den Diphenolen in der wäßrig alkalischen Phase vorgelegt werden oder mit den Kettenabbrechern in dem organischen Lösungsmittel gelöst vor der Phosgenierung zugegeben werden.

Anstelle der einzusetzenden Diphenole können auch deren Mono- und/oder Bischlorkohlensäureester mitverwendet werden, wobei diese in organischen Lösungsmitteln gelöst zugegebenen werden. Die Menge an Kettenabbrechern sowie an Verzweigern richtet sich dann nach Molen Diphenolat-Struktureinheiten, also beispielsweise -O-D-O-; ebenso kann bei Einsatz von Chlorkohlensäureester die Phosgenmenge in bekannter Weise entsprechend reduziert werden.

Die hydrierte Abietinsäure kann aber auch in der wäßrigen alkalischen Phase zusammen mit den Diphenolen zu Beginn der Reaktion vorgelegt werden, aber auch gelöst in organischem Lösungsmittel während der Phosgenierung zugesetzt werden. Geeignete organische Lösungsmittel für die Lösung der hydrierten Abietinsäure sowie gegebenenfalls für die Verzweiger, und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol.

Als organische Phase für die Phasengrenzflächenpolykondensation dient beispielsweise Methylenchlorid, Chlorbenzol sowie Mischungen aus Methylenchlorid und Chlorbenzol.

Die Herstellung der erfindungsgemäßen Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole eingesetzter Diphenole bzw. Mole eingesetzter Diphenolat-Struktureinheiten verwendet werden. Die Katalysatoren können vor Beginn der Phosgenierung oder während oder auch nach der Phosgenierung zugesetzt werden.

Die Isolierung der erfindungsgemäßen Polycarbonate erfolgt in bekannter Weise.

Die erfindungsgemäßen Polycarbonate können die für Polycarbonate üblichen Additive in den üblichen Mengen enthalten, also beispielsweise Stabilisatoren, Füllstoffe, Entformungsmittel, Pigmente und/oder Flammschutzmittel. Man kann sie während oder nach der Polycarbonatherstellung in bekannter Weise zugeben.

Die erfindungsgemäßen Polycarbonate können in bekannter Weise zu beliebigen Formkörpern via Extrusion oder Spritzguß auf den bekannten Verarbeitungsmaschinen verarbeitet werden.

Die erfindungsgemäßen Polycarbonate sowie die daraus hergestellten Formkörper zeichnen sich durch die eingangs erwähnte gute Eigenschaftskombination aus.

Das erfindungsgemäße Verfahren zur Herstellung deraromatischen Polycarbonate mit den Endgruppen der Formel (I) läßt sich auch auf die Herstellung von aromatischen Polyestercarbonaten ausdehnen, indem ein Teil der Carbonatspender durch reaktive aromatische Dicarbonsäurederivate, vorzugsweise durch aroamtische Dicarbonsäuredichloride oder aromatische Dicarbonsäuredimethylester ersetzt wird, je nachdem, ob man in Lösung (Phasengrenzflächenverfahren, Pyridinverfahren) oder in der Schmelze arbeitet.

Gegenstand der vorliegenden Erfindung ist somit auch die Verwendung von hydrierter Abietinsäure als Kettenabbrecher für die Herstellung von thermoplastischen, aromatischen Polyestercarbonaten.

Gegenstand der vorliegenden Erfindung ist somit auch ein Verfahren zur Herstellung von thermoplastischen,

aromatischen Polyestercarbonaten aus Diphenolen, Carbonatspendern, reaktiven aromatischen Dicarbonsäurederivaten, Kettenabbrechern und gegebenenfalls Verzweigern nach den bekannten Methoden des Phasengrenzflächenverfahrens, des Verfahrens in homogener Lösung oder des Schmelzumesterungsverfahrens, das dadurch gekennzeichnet ist, daß man als Kettenabbrecher hydrierte Abietinsäure, vorzugsweise Tetrahydroabietinsäure in Mengen von 0,6 bis 12 Mol-%, vorzugsweise 2 bis 7 Mol-%, bezogen auf Mole an eingesetzten Diphenolen einsetzt.

Reaktive aromatische Dicarbonsäurederivate sind solche, die unter den Bedingungen der Polycarbonatherstellung bifunktionell reagieren. Bevorzugt sind, wie bereits erwähnt, die Di-säuredichloride und die Di-säure-dimethylester.

Bevorzugte aromatische Dicarbonsäuren sind Isophthalsäure und Terephthalsäure und deren Gemische, deren bevorzugte Derivate die Dichloride und die Dimethylester.

Bezüglich der einzusetzenden Diphenole, Carbonatspender, Verzweiger, der einzuhaltenden Reaktionsbedingungen gelten die bereits für die Herstellung der erfindungsgemäßen Polycarbonate gemachten Ausführungen.

Die Herstellung der erfindungsgemäßen Polyestercarbonate erfolgt wiederum vorzugsweise nach dem Phasengrenzflächenverfahren wie bereits für die Herstellung der entsprechenden Polycarbonate beschrieben, wobei ein Teil des Phosgens durch aroamtische Dicarbonsäuredichloride ersetzt wird.

Das Verhältnis von Carbonatspender zu reaktivem aromatischem Dicarbonsäure-derivat kann in weiten Grenzen variieren, wobei vorzugsweise bis zu 40 Mol-%, bezogen auf die Molsumme aus Carbonatspender + Dicarbonsäurederivat, durch die reaktiven aromatischen Dicarbonsäurederivate ersetzt werden können, je nachdem, wie sehr die erfindungsgemäßen Polycarbonate zu noch höherer Wärmeformbeständigkeit hin modifiziert werden sollen.

Gegenstand der vorliegenden Erfindung sind somit außerdem die nach dem erfindungsgemäßen Verfahren erhältlichen aromatischen Polyestercarbonate mit mittleren Molekulargewichten $\overline{M}w$ (Gewichtsmittel, ermittelt von 10 000 bis 200 000, vorzugsweise von 30 000 bis 70 000

Gegenstand der vorliegenden Erfindung sind außerdem thermoplastische, aromatische gegebenenfalls verzweigte Polyestercarbonate mit Gewichtsmittelmolekulargewichten $\overline{M}w$ (ermittelt wie vorstehend) von 10 000 bis 200 000, vorzugsweise von 30 000 bis 70 000, mit Endgruppen der Formel (I).

Die erfindungsgemäßen Polyestercarbonate haben eine erhöhte Wärmeformbeständigkeit bei gleichzeitig erhöhter Tieftemperaturkerbschlagzähigkeit. Das Material ist transparent und temperaturstabil wie übliches Polycarbonat.

Bezüglich Isolierung, Additivzusatz und thermoplastische Verarbeitung gelten die vorstehend für die erfindungsgemäßen Polycarbonate gemachten Ausführungen.

Der technische Einsatz der erfindungsgemäßen Polycarbonate und der erfindungsgemäßen Polyestercarbonate erfolgt für medizinische Anwendungen, vorzugsweise überall dort, wo heißdampfsterilisiert wird, für optische Anwendungen und Informationsspeicher.

Ferner können die erfindungsgemäßen Polycarbonate überall dort vorteilhaft eingesetzt werden, wo höhere Wärmeformbeständigkeit erwünscht ist.

## Beispiele

### Ausführungsbeispiel

In einem 1 l-4-Halswellenbrecherkolben, werden bei Raumtemperatur 22,8 g Bisphenol-A, 0,918 g hydrierte Abietinsäure, 39,11 g 45 %iges NaOH und 270 ml Dichlormethan vorgelegt. Man leitet 16 g Phosgen ein, gibt anschließend 0,11 ml N-Ethylpiperidin hinzu und rührt 45 min nach. Es wird mit verdünnter HCl angesäuert, die organische Phase abgetrennt und ionenfrei gewaschen. Nach Trocknen und Einengen erhielt man 25,2 g Produkt mit einer relativen Lösungsviskositat von 1,28 (0,5 % in Dichlormethan). Das mit hydrierter Abietinsäure terminierte Polycarbonat wies eine Wärmeformbeständigkeit (Vicat B) von 155°C und beim Kerbschlagversuch einen Übergang zwischen Zäh- und Sprödbruch bei -20°C auf. Das Produkt ist transparent und randlos und verfärbt sich beim Erhitzen auf 280°C (2 Min unter $N_2$) nicht.

### Vergleichsbeispiel a

Ein mit Phenol als Kettenabbrecher nach dem in Beispiel 1 beschriebenen Grenzflächenverfahren hergestelltes Polycarbonat mit einer relativen Lösungsviskosität von 1,28 weist eine Wärmeformbeständigkeit (Vicat B) von 149°C und beim Kermschlagversuch einen Übergang zwischen Zäh- und Sprödbruch zwischen 0°C und -10°C auf.

### Vergleichsbeispiel b

wie Ausführungsbeispiel oben, nur daß anstelle der hydrierten Abietinsäure nicht hydrierte Abetinsäure eingesetzt wird.

Man verfuhr wie im Ausführungsbeispiel beschrieben, nur daß anstelle der hydrierten Abietinsäure 0,912 g Abietinsäure eingesetzt wurde. Das Produkt zeigte eine relative Lösungsviskosität von 1,28 und wies eine Wärmeformbeständigkeit (Vicat B) von 155°C auf, jedoch war die Eigenfarbe der Produkte gelblich und verfärbte sich beim Erhitzen auf 280°C (2 Min unter $N_2$) bräunlich.

## Patentansprüche

1. Verwendung von hydrierter Abietinsäure als Kettenabbrecher für die Herstellung von thermoplastischen, aromatischen Polycarbonaten.

2. Verfahren zur Herstellung von thermoplastischen, aromatischen Polycarbonaten aus Diphenolen, Carbonatspendern, Kettenabbrechern und gegebenenfalls Verzweigern nach den bekannten Methoden des Phasengrenzflächenverfahrens, des Verfahrens in homogener Lösung oder des Schmelzumesterungsverfahrens, dadurch gekennzeichnet, daß man als Kettenabbrecher hydrierte Abietinsäure, vorzugsweise Tetrahydroabietinsäure in Mengen von 0,6 bis 12 Mol-%, bezogen auf Mole an eingesetzten Diphenolen, einsetzt.

3. Polycarbonate mit mittleren Molekulargewichten $\overline{M}w$ (Gewichtsmittel, ermittelt von 10 000 bis 200 000, erhältlich nach dem Verfahren des Anspruchs 2.

4. Thermoplastische, aromatische gegebenenfalls verzweigte Polycarbonate mit Gewichtsmittelmolekulargewichten $\overline{M}w$ (ermittelt wie im Anspruch 3) von 10 000 bis 200 000 mit Endgruppen der Formel (I)

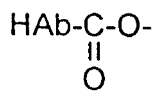

(I),

worin

HAb den hydrierten Rest der Formel (Ia) und/oder der Formel (Ib)

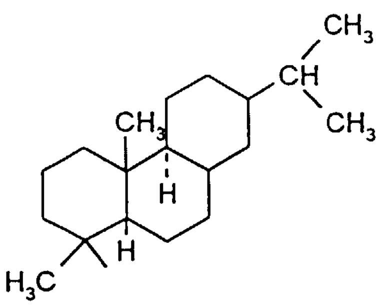

(Ia)

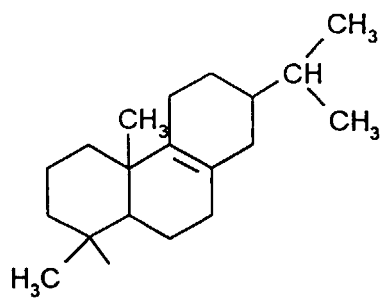

(Ib)

darstellt.

5. Verwendung von hydrierter Abietinsäure als Kettenabbrecher für die Herstellung von thermoplastischen, aromatischen Polyestercarbonaten.

6. Verfahren zur Herstellung von thermoplastischen, aromatischen Polyestercarbonaten aus Diphenolen, Carbonatspendern, reaktiven aromatischen Dicarbonsäurederivaten, Kettenabbrechern und gegebenenfalls Verzweigern nach den bekannten Methoden des Phasengrenzflächenverfahrens, des Verfahrens in homogener Lösung oder des Schmelzumesterungsverfahrens, dadurch gekennzeichnet, daß man als Kettenabbrecher hydrierte Abietinsäure, vorzugsweise Tetrahydroabietinsäure in Mengen von 0,6 bis 12 Mol-%, bezogen auf Mole an eingesetzten Diphenolen einsetzt.

7. Polyestercarbonate mit mittleren Molekulargewichten $\overline{M}w$ (Gewichtsmittel, ermittelt über die relative Lösungsviskosität in $CH_2Cl_2$ bei 25°C und 0,5 g pro 100 ml $CH_2Cl_2$ von 10 000 bis 200 000, erhältlich nach dem Verfahren des Anspruchs 6.

8. Thermoplastische, aromatische, gegebenenfalls verzweigte Polyestercarbonate mit Gewichtsmittelmolekulargewichten $\overline{M}w$ (ermittelt wie im Anspruch 7) von 10 000 bis 200 000, mit Endgruppen der Formel (I) des Anspruchs 4.

## Claims

1. Use of hydrogenated abietic acid as a chain terminator for the production of thermoplastic, aromatic polycarbonates.

2. Process for the production of thermoplastic, aromatic polycarbonates from diphenols, carbonate donors, chain terminators and optionally branching agents using the known methods of the phase interface process, the homogeneous solution process or the melt transesterification process, characterised in that the chain terminator used is hydrogenated abietic acid, preferably tetrahydroabietic acid, in quantities of 0.6 to 12 mol.%, relative to moles of diphenols used.

3. Polycarbonates having average molecular weights $\overline{M}_w$ (weight average, determined ...
of 10000 to 200000, obtainable using the process of claim 2.

4. Thermoplastic, aromatic, optionally branched polycarbonates with weight average molecular weights $\overline{M}_w$ (determined as in claim 3) of 10000 to 200000 having end groups of the formula (I)

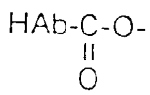

(I),

in which

HAb represents the hydrogenated residue of the formula (Ia) and/or of the formula (Ib)

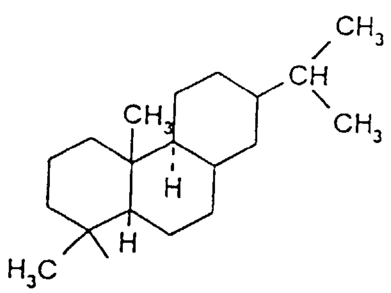

(Ia)

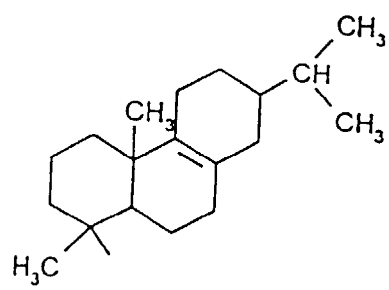

(Ib)

5. Use of hydrogenated abietic acid as a chain terminator for the production of thermoplastic, aromatic polyestercarbonates.

6. Process for the production of thermoplastic, aromatic polyestercarbonates from diphenols, carbonate donors, reactive aromatic dicarboxylic acid derivatives, chain terminators and optionally branching agents using the known methods of the phase interface process, the homogeneous solution process or the melt transesterification process, characterised in that the chain terminator used is hydrogenated abietic acid, preferably tetrahydroabietic acid, in quantities of 0.6 to 12 mol.%, relative to moles of diphenols used.

7. Polyestercarbonates having average molecular weights $\overline{M}_w$ (weight average, determined from the relative solution

viscosity in $CH_2Cl_2$ at 25°C and 0.5 g per 100 ml of $CH_2Cl_2$) of 10000 to 200000, obtainable using the process of claim 6.

**8.** Thermoplastic, aromatic, optionally branched polyestercarbonates with weight average molecular weights $\overline{M}_w$ (determined as in claim 7) of 10000 to 200000 having end groups of the formula (I) of claim 4.

**Revendications**

**1.** Utilisation d'acide abiétique hydrogéné à titre d'agent de rupture de chaîne pour la préparation de polycarbonates aromatiques thermoplastiques.

**2.** Procédé pour la préparation de polycarbonates aromatiques thermoplastiques à partir de phénols, de générateurs de carbonates, d'agents de rupture de chaînes et, le cas échéant, d'agents de ramification conformément aux méthodes connues du procédé à l'interface, du procédé en solution homogène ou du procédé de trans-estérification en fusion, caractérisé en ce qu'on met en oeuvre, à titre d'agent de rupture de chaîne, de l'acide abiétique hydrogéné, de préférence l'acide tétrahydroabiétique dans des quantités de 0,6 à 12 moles % rapportés au nombre de moles des diphénols mis en oeuvre.

**3.** Polycarbonates possédant des poids moléculaires $\overline{M}w$ (moyenne pondérale, déterminée [sic] de 10.000 à 200.000, que l'on obtient conformément au procédé selon la revendication 2.

**4.** Polycarbonates aromatiques thermoplastiques, le cas échéant ramifiés, possédant des poids moléculaires moyens en poids $\overline{M}w$ (déterminés comme indiqué à la revendication 3) de 10.000 à 200.000, contenant des groupes terminaux répondant à la formule (I)

HAb-C-O-
‖ (I)
O

dans laquelle

HAb représente le radical hydrogéné répondant à la formule (Ia) et/ou à la formule (Ib)

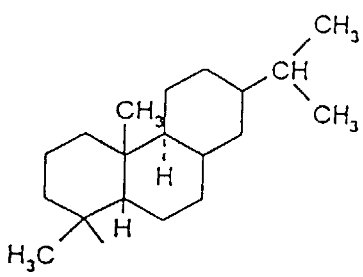
(Ia)

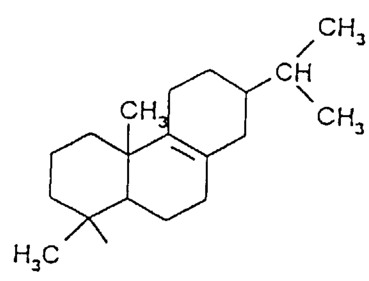
(Ib)

**5.** Utilisation d'acide abiétique hydrogéné à titre d'agent de rupture de chaîne pour la préparation de polyestercarbonates aromatiques thermoplastiques.

**6.** Procédé pour la préparation de polyestercarbonates aromatiques thermoplastiques à partir de diphénols, de générateurs de carbonates, de dérivés réactifs d'acides dicarboxyliques aromatiques, d'agents de rupture de chaînes et, le cas échéant, d'agents de ramification conformément aux méthodes connues du procédé à l'interface, du procédé en solution homogène ou du procédé de trans-estérification en fusion, caractérisé en ce qu'on met en oeuvre, à titre d'agent de rupture de chaîne, de l'acide abiétique hydrogéné, de préférence l'acide tétrahydroabiétique dans des quantités de 0,6 à 12 moles % rapportés au nombre de moles des diphénols mis en oeuvre.

**7.** Polyestercarbonates possédant des poids moléculaires moyens $\overline{M}w$ (moyenne pondérale, déterminée via la viscosité relative en solution dans du $CH_2Cl_2$ à 25°C et à concurrence de 0,5 g par 100 ml de $CH_2Cl_2$) de 10.000 à 200.000, que l'on obtient conformément au procédé selon la revendication 6.

**8.** Polyestercarbonates aromatiques thermoplastiques, le cas échéant ramifiés, possédant des poids moléculaires moyens en poids $\overline{M}w$ (déterminés comme indiqué à la revendication 7) de 10.000 à 200.000, contenant des groupes terminaux répondant à la formule (I) selon la revendication 4.